# EUROPEAN PATENT SPECIFICATION

(11) **EP 4 513 307 B1**
(45) Date of publication and mention of the grant of the patent: **26.08.2026**
(21) Application number: 24189276.9
(22) Date of filing: 17.07.2024
(51) Int. Cl.: G06F 3/01, G02B 27/00, G02B 27/01, G06V 10/141, G09G 5/00

(54) **APPARATUS, SYSTEMS AND METHODS FOR EYE TRACKING CALIBRATION**
VORRICHTUNG, SYSTEME UND VERFAHREN ZUR AUGENVERFOLGUNGSKALIBRIERUNG
APPAREIL, SYSTÈMES ET PROCÉDÉS D'ÉTALONNAGE DE SUIVI OCULAIRE

(30) Priority: 09.08.2023 GB 202312178
(43) Date of publication of application: 26.02.2025
(73) Proprietor: Sony Interactive Entertainment Inc., Tokyo 108-0075 (JP)
(72) Inventor: CONNOR, Patrick, London, W1F 7LP (GB)
(74) Representative: D Young & Co LLP

(56) References cited:
- US-A1- 2019 265 785
- US-A1- 2021 134 245
- US-A1- 2022 051 642

## Description

### Field of the Disclosure

The present disclosure relates to the field of eye tracking. In particular, the present disclosure relates to apparatus, systems and methods for improving eye tracking calibration.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Eye tracking systems are used to identify a location of a subject's gaze within an environment; in many cases, this location may be a position on a display screen that is being viewed by the subject. In a number of existing arrangements, this is performed using one or more inwards-facing cameras directed towards the subject's eye (or eyes) in order to determine a direction in which the eyes are oriented at any given time. Having identified the orientation of the eye, a gaze direction can be determined and a focal region may be determined as the intersection of the gaze direction of each eye.

One application for which gaze tracking is considered of particular use is that of use in head-mountable display units (HMDs). The use in HMDs may be of particular benefit owing to the close proximity of inward-facing cameras to the user's eyes, allowing the tracking to be performed much more accurately and precisely than in arrangements in which it is not possible to provide the cameras with such proximity.

By utilising gaze detection techniques, it may be possible to provide a more efficient and/or effective processing method for generating content or interacting with devices.

For example, gaze tracking may be used to provide user inputs or to assist with such inputs - a continued gaze at a location may act as a selection, or a gaze towards a particular object accompanied by another input (such as a button press) may be considered as a suitable input. This may be more effective as an input method in some embodiments, particularly in those in which a controller is not provided or when a user has limited mobility.

Foveal rendering is an example of a use for the results of a gaze tracking process in order to improve the efficiency of a content generation process. Foveal rendering is rendering that is performed so as to exploit the fact that human vision is only able to identify high detail in a narrow region (the fovea), with the ability to discern detail tailing off sharply outside of this region.

In such methods, a portion of the display is identified as being an area of focus in accordance with the user's gaze direction. This portion of the display is supplied with high-quality image content, while the remaining areas of the display are provided with lower-quality (and therefore less resource intensive to generate) image content. This can lead to a more efficient use of available processing resources without a noticeable degradation of image quality for the user.

It is therefore considered advantageous to be able to improve eye tracking methods, and/or apply the results of such methods in an improved manner. It is in this context that the present disclosure arises. Previously proposed arrangements are disclosed by US 2022/051642 A1, US 2019/265785 A1, and US 2021/134245 A1.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram illustrating an example of an entertainment device;
Figure 2 is a schematic diagram illustrating a head mounted display "HMD" worn by a user;
Figure 3A schematically illustrates a plan view of an HMD;
Figure 3B schematically illustrates a near-eye tracking arrangement;
Figure 4 schematically illustrates a gaze tracking environment;
Figure 5 is a schematic diagram illustrating an information processing apparatus; and
Figure 6 is a schematic flowchart illustrating a method.

Embodiments of the invention will now be described, by way of example only, with reference to the accompanying drawings, in which:

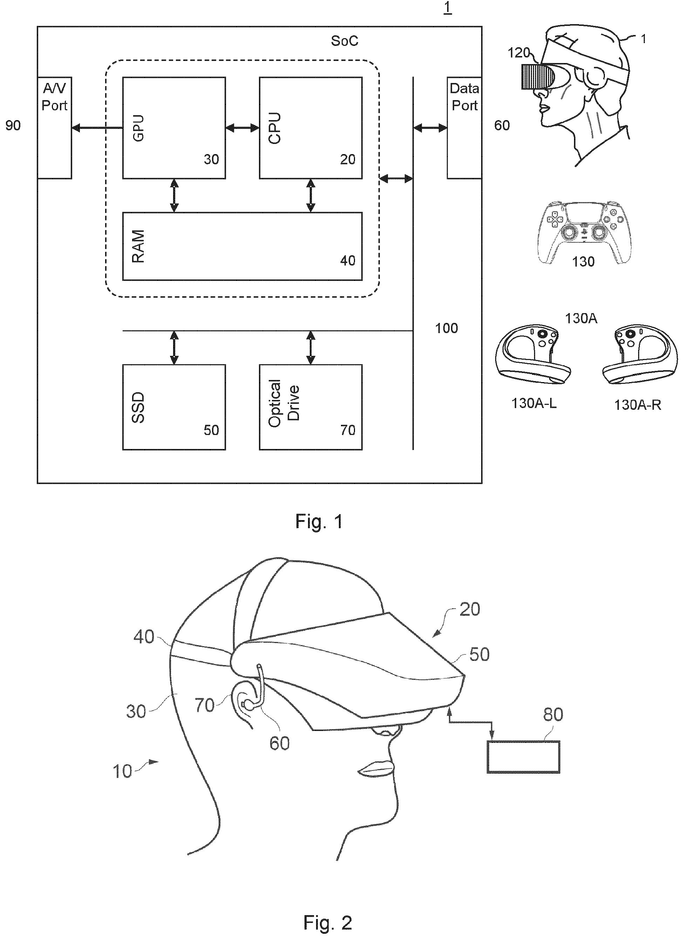

Figure 1 schematically illustrates an example entertainment device such as the Sony^{®} PlayStation 5^{®} (PS5) entertainment device.

The entertainment device 1 comprises a central processor (CPU) 20. This may be a single or multi core processor, for example comprising eight cores as in the PS5. The entertainment device also comprises a graphical processing unit (GPU) 30. The GPU can be physically separate to the CPU, or integrated with the CPU as a system on a chip (SoC) as in the PS5.

The entertainment device also comprises RAM 40, and may either have separate a random access memory (RAM) for each of the CPU and GPU, or shared RAM as shown in Figure 1. Both the CPU and the GPU thus have access to RAM. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit and/or receive data via one or more data ports 60, such as a universal serial bus (USB) port, Ethernet^{®} port, Wi-Fi^{®} port, Bluetooth^{®} port, Wi-Fi ^{®} port or similar, as appropriate. It may also optionally receive data via an optical drive 70.

Audio/visual outputs from the entertainment device are typically provided through one or more A/V ports 90, such as an HDMI port, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the entertainment device is typically provided using one or more handheld controllers (130, 130A), such as the DualSense^{®} controller (130) in the case of the PS5, and/or one or more VR controllers (130A-L, 130A-R) in the case of the HMD.

Figure 1 therefore provides an example of an entertainment device suitable for performing processing for executing interactive content and generating video images and audio for output to a user. The entertainment device may be used for playing video games which may be executed locally by the entertainment device and/or executed by one or more remote servers. The entertainment device may for example generate images and audio for output by one or more devices such as a television and/or the head mounted display unit 120. In addition to video games, other content such as audiobooks, podcasts, online videos, movies, television programmes, music tracks, music playlists and so on may be accessed using such an entertainment device.

Figure 2 schematically illustrates an example of a user 10 wearing an HMD 20 (as an example of a generic head-mountable apparatus - other examples may include audio headphones or a head-mountable light source) on the user's head 30.

The HMD 20 comprises a frame 40, in this example formed of a rear strap and a top strap, and a display portion 50. As noted above, many gaze tracking arrangements may be considered particularly suitable for use in HMD systems; however, use with such an HMD system should not be considered essential.

Note that the HMD of Figure 2 may comprise further features, to be described below in connection with other drawings, but which are not shown in Figure 2 for clarity of this initial explanation.

The HMD of Figure 2 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

A front-facing camera 122 may capture images to the front of the HMD, in use. Such images may be used for head tracking purposes, in some embodiments, while it may also be suitable for capturing images for an augmented reality (AR) style experience. A Bluetooth^{®} antenna 124 may provide communication facilities or may simply be arranged as a directional antenna to allow a detection of the direction of a nearby Bluetooth^{®} transmitter.

In operation, a video signal is provided for display by the HMD. This could be provided by an external video signal source 80 such as a video games machine or data processing apparatus (such as a personal computer), in which case the signals could be transmitted to the HMD by a wired or a wireless connection. Examples of suitable wireless connections include Bluetooth^{®} connections. Audio signals for the earpieces 60 can be carried by the same connection. Similarly, any control signals passed from the HMD to the video (audio) signal source may be carried by the same connection. Furthermore, a power supply 83 (including one or more batteries and/or being connectable to a mains power outlet) may be linked by a cable to the HMD. Note that the power supply 83 and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may be carried by, for example, an optical fibre cable. In other embodiments, at least part of the functionality associated with generating image and/or audio signals for presentation to the user may be carried out by circuitry and/or processing forming part of the HMD itself. A power supply may be provided as part of the HMD itself.

Some embodiments of the disclosure are applicable to an HMD having at least one electrical and/or optical cable linking the HMD to another device, such as a power supply and/or a video (and/or audio) signal source. So, embodiments of the disclosure can include, for example:
(a) an HMD having its own power supply (as part of the HMD arrangement) but a cabled connection to a video and/or audio signal source;
(b) an HMD having a cabled connection to a power supply and to a video and/or audio signal source, embodied as a single physical cable or more than one physical cable;
(c) an HMD having its own video and/or audio signal source (as part of the HMD arrangement) and a cabled connection to a power supply; or
(d) an HMD having a wireless connection to a video and/or audio signal source and a cabled connection to a power supply.

If one or more cables are used, the physical position at which the cable enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables relative to the HMD in Figure 2 should be treated merely as a schematic representation.

Accordingly, the arrangement of Figure 2 provides an example of a head-mountable display system comprising a frame to be mounted onto an observer's head, the frame defining one or two eye display positions which, in use, are positioned in front of a respective eye of the observer and a display element (display unit) mounted with respect to each of the eye display positions, the display element providing a virtual image of a video display of a video signal from a video signal source to that eye of the observer.

Figure 2 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment.

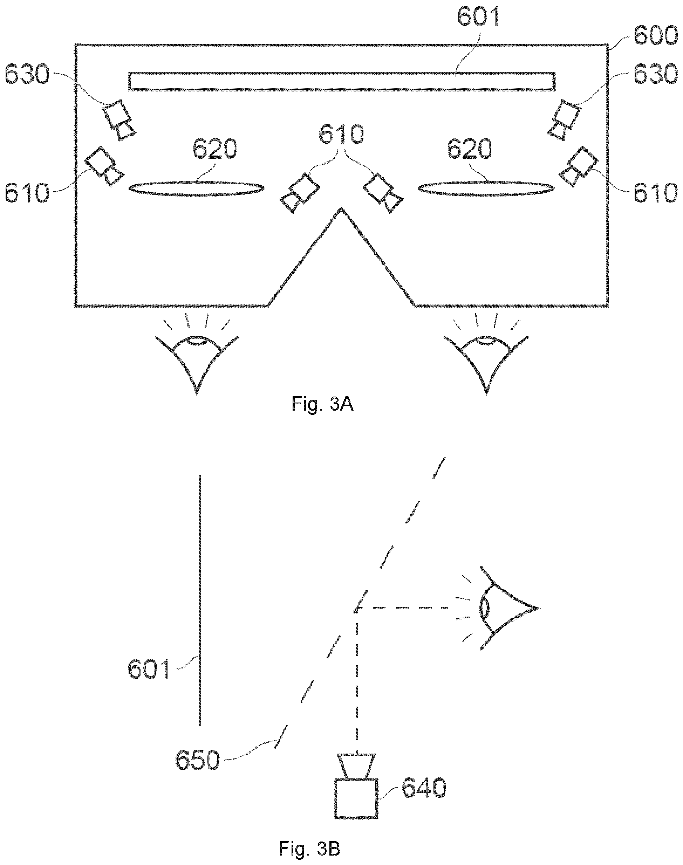

Figures 3A and 3B schematically illustrate two possible arrangements for performing eye tracking using sensors on an HMD. The cameras provided within such arrangements may be selected freely so as to be able to perform an effective eye-tracking method. In some existing arrangements, visible light cameras are used to capture images of a user's eyes. Alternatively or in addition, infra-red (IR) cameras may be used so as to reduce interference either in the captured signals or with the user's vision should a corresponding light source be provided, or to improve performance in low-light conditions.

Figure 3A shows an example of an eye tracking arrangement in which image sensors (e.g. cameras) are arranged within an HMD so as to capture images of the user's eyes from a short distance. This may be referred to as near-eye tracking, or head-mounted tracking.

In this example, an HMD with a display element (display unit) 601 is provided with image sensors 610 that are each arranged so as to directly capture one or more images of a respective one of the user's eyes using an optical path that does not include the lens 620. This may be advantageous in that distortion in the captured image due to the optical effect of the lens is able to be avoided. Four image sensors 610 are shown here as examples of possible positions at which eye-tracking image sensors may be provided, although it should be considered that any number of image sensors may be provided in any suitable location so as to be able to image the corresponding eye effectively. For example, only one image sensor may be provided per eye or more than two image sensors may be provided for each eye.

However it is considered that in a number of embodiments it is advantageous that the image sensors are instead arranged so as to include the lens 620 in the optical path used to capture images of the eye. Examples of such positions are shown by the image sensors 630. While this may result in processing being required to enable suitably accurate tracking to be performed, due to the deformation in the captured image due to the lens, this may be performed relatively simply due to the fixed relative positions of the corresponding image sensors and lenses. An advantage of including the lens within the optical path may be that of simplifying the physical constraints upon the design of an HMD, for example.

Figure 3B shows an example of a gaze tracking arrangement in which the image sensors are instead arranged so as to indirectly capture images of the user's eyes. Such an arrangement may be particularly suited to use with infra-red (IR) image sensors or otherwise non-visible light sources, as will be apparent from the below description.

Figure 3B includes a mirror 650 arranged between a display 601 and the viewer's eye (of course, this can be extended to or duplicated at the user's other eye as appropriate). For the sake of clarity, any additional optics (such as lenses) are omitted in this Figure - it should be appreciated that they may be present at any suitable position within the depicted arrangement. The mirror 650 in such an arrangement is selected so as to be partially transmissive; that is, the mirror 650 should be selected so as to enable the image sensor 640 to obtain an image of the user's eye while the user views the display 601. One method of achieving this is to provide a mirror 650 that is reflective to IR wavelengths but transmissive to visible light - this enables IR light used for tracking to be reflected from the user's eye towards the image sensor 640 while the light emitted by the display 601 passes through the mirror uninterrupted.

Such an arrangement may be advantageous in that the image sensors may be more easily arranged out of view of the user, for instance. Further to this, improvements to the accuracy of the eye tracking may be obtained due to the fact that the image sensor captures images from a position that is effectively (due to the reflection) along the axis between the user's eye and the display.

Figures 3A and 3B thus illustrate example image sensor arrangements for capturing images comprising at least one eye of a user when viewing display images displayed by an HMD. As well as varying locations from which images are captured, eye-tracking arrangements may also differ in where the processing of the captured image data (e.g. to determine tracking data and/or to determine calibration parameters) is performed. In some cases, such processing may be performed at the HMD. Alternatively or in addition, such processing may be performed by another device that receives captured image data via one or more of a wired and/or wireless communication.

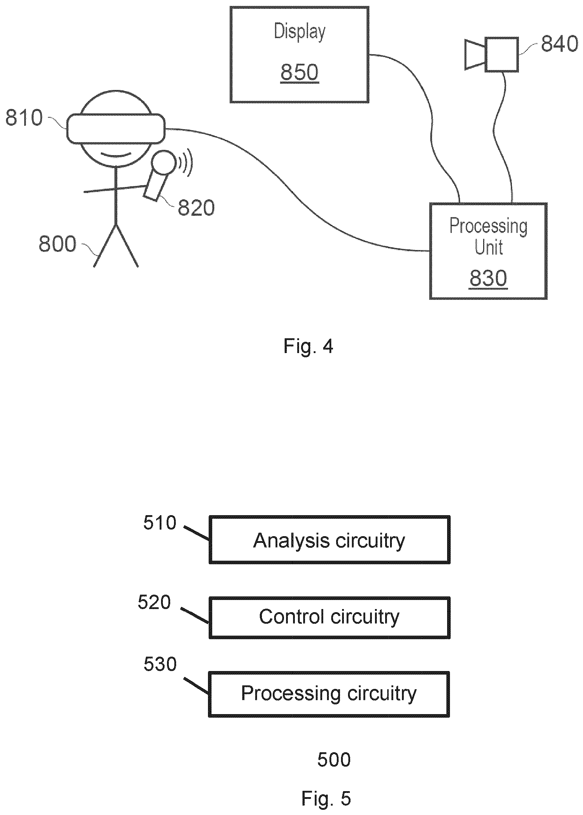

Figure 4 schematically illustrates an environment in which eye-tracking processing may be performed. In this example, a user 800 is using an HMD 810 that is associated with the processing unit 830, such as a games console, with the peripheral 820 allowing the user 800 to input commands to control the processing. The HMD 810 may perform eye tracking in line with an arrangement exemplified by Figure 3A or 3B, for example - that is, the HMD 810 may comprise one or more image sensors operable to capture images of either or both of the user's 800 eyes. The processing unit 830 may be operable to generate content for display at the HMD 810; although some (or all) of the content generation may be performed by processing units within the HMD 810.

The example arrangement in Figure 4 also comprises a camera 840, located outside of the HMD 810, and a display 850. In some cases, the camera 840 may be used for performing tracking of the user 800 while using the HMD 810, for example to identify body motion or a head orientation. The camera 840 and display 850 may be provided as well as or instead of the HMD 810; for example these may be used to capture images of a second user and to display images to that user while the first user 800 uses the HMD 810, or the first user 800 may be tracked and view content with these elements instead of the HMD 810. That is to say, the display 850 may be operable to display generated content provided by the processing unit 830 and the camera 840 may be operable to capture images of one or more users' eyes to enable eye-tracking to be performed.

While the connections shown in Figure 4 are shown by lines, this should of course not be taken to mean that the connections should be wired; any suitable connection method, including wireless connections such as wireless networks or Bluetooth^{®}, may be considered suitable. Similarly, while a dedicated processing unit 830 is shown in Figure 4 it is also considered that the processing may be performed in a distributed manner - such as using a combination of two or more of the HMD 810, one or more processing units, remote servers (cloud processing), or games consoles.

The processing required to generate tracking information from captured images of the user's 800 eye or eyes may be performed locally by the HMD 810, or the captured images or results of one or more detections may be transmitted to an external device (such as a the processing unit 830) for processing. In the former case, the HMD 810 may output the results of the processing to an external device for use in an image generation process if such processing is not performed exclusively at the HMD 810. In cases in which the HMD 810 is not present, captured images from the camera 840 are output to the processing unit 830 for processing.

Eye tracking arrangements typically involve a calibration process in which one or more calibration images (often a sequence of images) are displayed to a user so as to obtain one or more calibration parameters for the user. The one or more calibration images comprise targets (e.g. calibration stimuli) having known positions which are to be targeted by a user's gaze direction. By displaying calibration targets and detecting features of the eye when the eye is known to be targeting a given calibration target, a relationship between the detected features and the actual position of the calibration target can be established. For example, a position of a centre of a pupil and a position of a corneal reflection may be detected. A vector between the pupil centre and the corneal reflection (sometimes referred to as a pupil-corneal reflection vector) can thus be calculated and a relationship between such a vector and a position of a calibration target can be used for obtaining one or more calibration parameters for the user. Generally, one or more calibration images comprising a number of differently positioned calibration targets can be displayed so that calibration can be achieved for different areas of a screen. Hence, calibration is generally performed to establish a relationship between a detection result (e.g. a pupil-corneal reflection vector) with respect to the user's eye and a corresponding position on a display.

The inventor has appreciated that improvements concerning processing efficiency, processing time and/or user comfort in relation to eye tracking calibration can be achieved according to the techniques to be discussed below.

Referring now to Figure 5, an information processing apparatus 500 in accordance with embodiments of the disclosure comprises analysis circuitry 510, control circuitry 520 and processing circuitry 530. The information processing apparatus 500 may be provided as part of an entertainment device such as that described with respect to Figure 1.

In some embodiments of the disclosure, the information processing apparatus 500 may be a head mounted display, such as that described above with reference to Figure 2. The information processing apparatus 500 may be a head mounted display comprising one or more image sensors (e.g. 610, 630) configured to capture one or more images comprising at least one eye (or both eyes) of the user when the user is viewing display images. The one or more image sensors may comprise any suitable image sensor for capturing such images, including one or more of one or more infra-red image sensors and one or more visible image sensor (e.g. a RGB camera).

In some embodiments of the disclosure, the information processing apparatus 500 may be a device (such as the entertainment device 1 or the processing unit 830) which is operable to receive the captured images via one or more of a wired (e.g. USB) and/or wireless communication (e.g. Bluetooth^{®}). Hence, image sensors provided as part of an HMD may capture images comprising one or both of the user's eyes, and at least some or each of the captured images can be communicated to the data processing apparatus 500 for analysis according to the techniques to be discussed below. One or more of the captured images may optionally be encoded using any suitable image coding scheme. Hence, the processing circuitry 530 can be operable to output images for display by the HMD using one or more of a wired and/or wireless communication.

Hence, some embodiments of the disclosure provide a system comprising the information processing apparatus 500 and a head mountable display (HMD) comprising one or more image sensors (e.g. one or more of an infra-red image sensor and a colour image sensor) to capture one or more images including at least one eye of a user wearing the HMD during viewing of images displayed by the HMD, and communication circuitry operable to communicate at least some of the captured images to the information processing apparatus 500 via a wired (e.g. USB) and/or wireless (e.g. Bluetooth^{®}) communication.

The analysis circuitry 510 is operable to receive captured images comprising at least one eye of a user when viewing display images displayed by an HMD. The captured images may in some cases comprise a single eye of the user wearing the HMD. In other cases, the captured images may comprise both eyes of the user wearing the HMD. The images may have been captured in accordance with any of the techniques discussed above with reference to Figures 2-4 or may be captured using other suitable eye tracking arrangements. Generally, during display of images by the HMD, images of the user's eye(s) can be captured and analysed according to the techniques to be discussed below. In some examples, the images being viewed by the user may correspond to a content (e.g. a movie or a game) and/or may correspond to a subset of calibration images associated with a sequence of calibration images. In some examples, information associated with the image brightness at the time of capturing the image of the user's eye may also be used. In this way, a relationship between image brightness and one or more detected eye properties may be used. For example, detected pupil size and an image brightness associated therewith may be used so that changes in pupil size with image brightness can be detected. Alternatively, in some cases a plurality of images may be captured for the user and a detection of a largest pupil size for the user and a detection of a smallest pupil size for the user may be capable of being used for at least some of the techniques to be discussed below.

The analysis circuitry 510 is operable to detect one or more eye properties for the user in dependence on at least some of the captured images. Eye properties that may be detected may include physical eye properties relating to physical features of one or both of the user's eyes and/or behavioural properties. For example, a physical property of at least one eye such as an iris colour and/or a pupil size may be detected in one or more of the captured images. Alternatively or in addition, one or more types of eye condition may be detected based on one or more of the captured images. Other possible eye properties that may be detected using one or more of the captured images are discussed in more detail later.

The analysis circuitry 510 is operable to generate eye information. The eye information provides an indication of one or more properties of the user's eye(s) that have been detected from analysis of one or more of the captured image. For example, the eye information may be indicative of a detected pupil size, a detected range of pupil size, and/or a detected iris colour. In particular, one or more of an absolute size, absolute range and colour value may be indicated. Alternatively, the eye information may be generated to indicate that a detected eye property for the user falls within a given range. For example, the eye information may indicate that the iris colour for the user is detected to fall within a predefined range (and so corresponds to a predetermined colour). Alternatively or in addition, the eye information may indicate whether a detected range of pupil size for the user is less than a predefined range. The predefined range may for example have a value of X mm (where X may be a value in the range 0.1 - 1 mm, for example). In response to the detecting a pupil size range for the user (which may be detected based on analysis of one or both of the eyes) which is less than X mm, the eye information may be generated to indicate that the detected pupil size range for the user is smaller than the predefined range. Optionally, in response to the detecting a pupil size range for the use which is not less than X mm, the eye information may be generated to indicate that the detected pupil size range for the user is greater than or equal to the predefined range, or instead for such a user eye information pertaining to pupil size range may not be generated such that absence of this information may be inferred as the pupil size range being greater than or equal to the predefined range.

Iris colour for at least one eye of a user may be detected using an infra-red image and/or a colour image including the at least one eye of the user. The HMD may comprise an image sensor sensitive to infra-red and/or visible light to capture one or more of the images. Known image analysis techniques may be used to detect an image region corresponding to the iris and pixel values associated with the iris extracted. For example, contour detection techniques and other image segmentation techniques may be used. Pixel values may include a multi-channel value, such as an RGB value (e.g. 8-bits for each of the red, green and blue colour channel), or a grayscale value. Analysis of such pixel values associated with the iris region of the image can be performed and eye information indicative of iris colour generated accordingly. For example, colour classification may be performed with respect to the pixel values associated with the iris region to obtain a colour classification for the iris colour. For example, a plurality of classifications may be used corresponding to different eye colours such as grey, blue, green, hazel, brown and black. In some examples, grayscale values of an infra-red image (or which may be obtained by processing a colour image to average the red, green and blue pixel values to obtain grayscale values) may be analysed. Analysis of grayscale values associated with the iris region of the image may be performed and eye information indicative of iris colour generated accordingly.

Generally, iris colour results from an amount of pigment (melanin) at the front of the eye which influences absorption and scattering of incident light. Darker colour irises generally include greater amounts of pigment and thus scatter less light, whereas lighter colour irises (e.g. blue and grey) generally include much smaller amounts of this pigment and therefore scatter more light. More generally, an iris with reduced melanin will absorb less incident light and thus give the eye a lighter appearance. As an aside, a consequence of this is that eyes with lighter coloured irises may generally be more sensitive to light due to having less pigment to protect from bright light. Therefore, an analysis of grayscale values associated with the iris region can be used to generate eye information indicative of iris colour. For example, for grayscale values ranging between 0 and 255, with 0 corresponding to black and 255 corresponding to white, higher grayscale values will generally correlate with lighter colour irises due to the scattering properties of lighter irises. Hence, grayscale values associated with the iris region can be analysed (e.g. an average, such as a mean, median or mode) to determine an associated iris colour. For example, respective sub-ranges with respect to the full range of grayscale values (e.g. 0-255 in the case of an 8-bit channel) may each be associated with a different predetermined eye colour (e.g. black, brown, hazel, green, blue grey) and a sub-range corresponding to an average (e.g. mean, mode or median) grayscale value calculated for the iris region in a captured image can be identified and the eye information generated accordingly to indicate the iris colour associated with that sub-range. Hence more generally, analysis of grayscale values associated with an iris region in a captured image may be used to determine a given iris colour for the user's eye from a plurality of predetermined iris colours each associated with a respective sub-range of grayscale values. Hence, in some cases the eye information may be generated to indicate whether a detected iris colour is in a predetermined range of iris colour (e.g. a predetermined range comprising blue and grey iris colours).

Hence more generally, the analysis circuitry 510 is operable to generate the eye information for the user indicative of one or more detected eye properties for the user. Some example eye properties have been introduced above, and other possible eye properties are discussed in more detail later.

The control circuitry 520 is operable to control image brightness associated with one or more eye tracking calibration images to be displayed to the user in dependence on the eye information. Image brightness for one or more eye tracking calibration images to be displayed to the user is thus controlled according to one or more of the user's detected eye properties (e.g. an iris colour, an iris size, a detected type of eye condition and/or a detected behavioural property among others) so that one or more eye tracking calibration images suited to the user's eye properties can be subsequently displayed. The processing circuitry 530 is operable to output one or more of the eye tracking calibration images for display by the HMD.

Operations performed by the control circuitry 520 to control image brightness for one or more eye tracking calibration images be displayed to the user by the HMD may take a variety of different forms using one or more hardware and/or software techniques. Generally, control of the image brightness may be achieved through controlling the HMD itself (by controlling a backlight array setting as discussed below) and/or controlling pixel values of calibration images which are to be displayed by the HMD. Generally, the control circuitry 520 is operable to control image brightness associated with one or more eye tracking calibration images to be displayed to the user in dependence on the eye information so that an amount of light that is incident upon the user's eye(s) during display of the one or more eye tracking calibration images is controlled. This may be achieved through control of the HMD and/or control of pixel values for images to be displayed

In some cases, control of image brightness associated with one or more calibration images to be displayed to the user wearing the HMD may be achieved by controlling a backlight array associated with a display element of the HMD. A backlight array (e.g. an LED array) associated with a display element of the HMD may have an adjustable hardware brightness setting that can be set in response to a control signal generated by the control circuitry. For example, for many existing HMDs (such as the PSVR2^{®}), a backlight array can be set to a brightness setting between 0% and 100% to vary a number of nits so that lower image brightness and higher image brightness can be achieved. Alternatively or in addition, image processing techniques may be used for controlling image brightness associated with one or more calibration images to be displayed to the user wearing the HMD. For example, image processing techniques can be performed to control pixel values to thereby control an image brightness for an image to be displayed. In particular, in the case of an image for which the pixels have RGB channels (e.g. 8-bits for each channel) then brightness associated with such an image can be controlled by applying a scaling factor for each colour channel. In some examples, image brightness manipulation can be achieved by adding scaling factor to each colour channel. Hence more generally, the control circuitry 520 is operable to control image brightness for one or more eye tracking calibration images be displayed to the user wearing the HMD and this may be achieved thorough hardware based technique and/or software based techniques sing image processing operations.

Therefore, in some embodiments of the disclosure, the control circuitry 520 is configured to control a backlight array associated with the HMD to thereby control the image brightness associated with one or more eye tracking calibration images to be displayed to the user. For example, a sequence of calibration images to be displayed to the user may be output by the processing circuitry 530 and the control circuitry may generate a control signal for controlling the backlight array. The backlight array may be controlled to have a single brightness during the display of the one or more eye tracking calibration images, or may be controlled to have two or more different brightnesses during the display.

In some embodiments of the disclosure, the control circuitry 520 is configured to generate one or more of the eye tracking calibration images for display in dependence on the eye information. Hence, image processing may be performed in dependence on the eye information. Alternatively or in addition, in some cases, one or more previously generated eye tracking calibration images (also referred to herein as calibration images) may be post-processed to adjust an image brightness. Alternatively or in addition, one or more of the eye tracking calibration images may be selected from a plurality of predetermined calibration images (e.g. a calibration image library) for use during calibration. In particular, one or more of the eye tracking calibration images may be selected from storage circuitry that stores a plurality of predetermined calibration images for use during calibration. Alternatively or in addition, one or more of the eye tracking calibration images may be selected by selecting a calibration mode responsive to the eye information. Hence more generally, processing is performed by the control circuitry 520 so as to control image brightness associated with one or more eye tracking calibration images to be displayed to the user in dependence on the eye information for the user.

In the following discussion, references to controlling image brightness refer to one or both of controlling a backlight array and controlling pixel values. Moreover, any of the techniques discussed below for controlling image brightness for one or more eye tracking calibration images to be displayed to the user may be achieved through control of a backlight array or image processing, or a combination of the two.

For the majority of people, it is expected that pupil size changes significantly between high and low brightness environments. Smaller pupil sizes are generally associated with higher brightness, whereas larger pupil sizes are generally associated with lower brightness. For this reason, it is generally desirable for calibration images (eye tracking calibration images) to have an image brightness that is the same as or at least similar to content images (e.g. a video game images), so that calibration parameters can be obtained for a pupil size expected for the user under conditions similar to that expected during viewing of a content. Hence, for various reasons, eye tracking calibration may in some cases involve displaying one or more calibration images having a relatively high brightness, such as a default brightness associated with a content (e.g. a video game) or an HMD.

It is generally desirable for eye tracking calibration images to have two or more different images brightnesses so as to obtain calibration parameters for the user's eye under different brightnesses and thus with different pupil sizes. Such techniques therefore typically involve one or more relatively lower brightness calibration images and one or more relatively higher brightness calibration images.

The inventor has appreciated that, for some users, the display of one or more relatively high brightness eye tracking calibration images during eye tracking calibration may represent an inefficient use of processing resources and/or may also cause user discomfort. For example, some users may have one or more eye characteristics such that their pupil (or both pupils) exhibit no (or relatively little) change to the extent that performing calibration at high image brightness provides no or minimal improvement beyond calibration that can be achieved using lower brightness images. Alternatively or in addition, some users may have one or more eye characteristics such that performing calibration at high image brightness causes discomfort. For example, photophobia can be associated with certain types of detectable eye condition such as cataracts or astigmatism, and/or certain iris colours such as lighter coloured irises and in particular blue or grey irises.

In the techniques of the present disclosure, through analysis of images including a user's eye (or both eyes), one or more eye properties are capable of being detected from which it is possible to determine that display of a relatively high brightness eye tracking calibration image is likely to provide little or no improvement for eye tracking calibration and/or likely to cause discomfort for the user. Hence, image brightness for one or more eye tracking calibration images to be displayed to the user can advantageously be controlled in dependence on the eye information to potentially avoid wasteful use of processing resources during eye tracking calibration and/or allow calibration with improved user comfort.

As mentioned above, the control circuitry 520 is operable to control image brightness associated with one or more eye tracking calibration images to be displayed to the user in dependence on the eye information. This may be achieved using a number of techniques. In the following discussion the terms "eye tracking calibration image" and "calibration image" are used interchangeably to refer to images that are suitable for performing eye tracking calibration. In some cases, one or more control signals may be generated responsive to the eye information for controlling the backlight array associated with the HMD. As discussed in the following paragraphs, in some cases a predetermined image brightness setting associated with a predetermined calibration phase comprising one or more calibration images may be modified by the control circuitry 520 so as to reduce a maximum image brightness associated with the predetermined calibration. Alternatively or in addition, a selection of one or more calibration images from a plurality of calibration images may be performed to obtain a sequence of one or more calibration images of appropriate image brightness for the user. For example, the control circuitry may perform a selection with respect to a plurality of candidate calibration images having different image brightnesses in dependence on the eye information so as to select one or more calibration images according to their image brightness to obtain a selected set of calibration images. Alternatively or in addition, a plurality of calibration modes may be defined in advance each being associated with one or more calibration images each calibration mode differing from another calibration mode by virtue of having a different maximum image brightness associated therewith, and one of the calibration modes may be selected in dependence on the eye information. Hence more generally, the control circuitry 520 can control image brightness associated with one or more eye tracking calibration images to be displayed to the user. In particular, the control circuitry 520 can be configured to control a maximum image brightness associated with one or more of the eye tracking calibration images in dependence on the eye information according to such techniques.

In some embodiments of the disclosure, the control circuitry 520 may be configured to generate one or more of the eye tracking calibration images for display according to a predetermined image brightness setting. For example, the information processing apparatus 500 may store information regarding a predetermined sequence of eye tracking calibration images to be displayed and a predetermined image brightness setting specifying a brightness for each of the eye tracking calibration images. The control circuitry 520 can be configured to determine whether to reduce a maximum image brightness associated with the predetermined image brightness setting in dependence on the eye information. Hence, the control circuitry 520 may use a predetermined image brightness setting specifying one or more brightness levels to be used and, in response to the generated eye information, the control circuitry 520 can be configured to modify the predetermined image brightness setting to reduce a maximum image brightness associated with the predetermined image brightness setting. For example, the control circuitry 520 may be configured to generate one or more eye tracking calibration images each having a same image brightness specified by the predetermined image brightness setting. Alternatively, the control circuitry 520 may be configured to generate a sequence of two or more eye tracking calibration images for which the predetermined image brightness setting specifies two or more different image brightnesses (e.g. one or more first calibration images may have a first image brightness and one or more second calibration images to be displayed subsequent to the one or more first calibration images may have a second image brightness greater than the first image brightness). In such cases at least the maximum image brightness can be reduced in dependence on the generated eye information. This represents an example of the control circuitry 520 being operable to generate a default set of one or more calibration images for display according to a predetermined image brightness setting and modification of the predetermined image brightness setting being performed depending on the generated eye information. Optionally, the control circuitry 520 may instead be operable to generate the default set of one or more calibration images for display according to the predetermined image brightness setting, and subsequently apply post-processing to one or more of the calibration images to reduce an image brightness.

In some examples, the control circuitry 520 is configured to evaluate the generated eye information with respect to one or more predetermined conditions and reduce a maximum image brightness associated with the predetermined image brightness setting depending on whether the eye information satisfies one or more of the predetermined conditions. One or more of a value and a classification associated with a given eye property (e.g. iris colour, pupil size, pupil size range) for the user may be evaluated with respect to one or more predetermined conditions (also referred to as pre-set conditions).

For example, the eye information may be indicative of one or more of a value and a classification associated with an iris colour of the user's eye. A value indicative of a colour associated with an iris of the user's eye may be evaluated with respect to a pre-set condition specifying a predetermined threshold value and/or predetermined value range. Alternatively or in addition, a classification indicative of a colour associated with an iris of the user's eye may be evaluated with respect to a pre-set condition specifying one or more predefined colour classifications. Hence, in response to the eye information being indicative of a value and/or a classification associated with an iris colour of the user's eye that satisfies a pre-set condition (e.g. matching the classification with a predefined colour classifications) the control circuitry can reduce a maximum image brightness associated with the predetermined image brightness setting. In some examples, the eye information may indicate a grayscale value associated with the iris of the user's eye and the pre-set condition may specify a predetermined grayscale value so that in response to the eye information being indicative of a grayscale value that is lighter (e.g. greater in the case where higher grayscale values correspond to lighter shades) than the predetermined grayscale value, the control circuitry 520 reduces the maximum image brightness associated with the predetermined image brightness setting, and otherwise the predetermined image brightness setting may remain unmodified. For example, the predetermined grayscale value may set to a value determined through empirical observations to correspond to a colour such as green or blue. This represents an example of the control circuitry being operable to control image brightness associated with one or more eye tracking calibration images to be displayed to the user in response the eye information being indicative of a predetermined iris colour.

In some examples, reduction of the maximum image brightness associated with the predetermined image brightness setting may be achieved using a reduction by a predetermined amount. For example, reduction of the maximum image brightness by a predetermined amount such as a predetermined percentage (e.g. a value in the range 5-50%) of the original value associated with the maximum image brightness may be used.

Alternatively, the control circuitry may reduce the maximum image brightness associated with the predetermined image brightness setting by an amount that is dependent on a value associated with at least one of the user's eye properties. For example, a magnitude by which the maximum image brightness is reduced may be dependent on a magnitude of a difference between a grayscale value associated with the user's iris and the predetermined grayscale value.

In some examples, a maximum image brightness that is appropriate for a given iris colour classification may be determined in advance so that in response to the eye information being indicative of the given iris colour classification, the control circuitry controls the image brightness associated with one or more eye tracking calibration images to be displayed to the user so that a maximum image brightness associated with one or more eye tracking calibration images to be displayed is less than or equal to the maximum image brightness that is determined for the given iris colour classification.

In particular, a maximum image brightness for an iris colour classification corresponding to blue may be determined. Therefore, in response to the eye information being indicative of the blue iris colour classification, a maximum image brightness associated with one or more eye tracking calibration images to be displayed can be controlled to be less than or equal to the maximum image brightness that is determined for the blue iris colour classification. It is generally expected that a maximum image brightness for an iris colour classification corresponding to blue is also suited for use with an iris colour classification corresponding to grey. Hence, in some examples, the maximum image brightness that is determined for the blue iris colour classification may be used for eye information indicative of any of a blue or grey iris colour (or other similarly light iris colour).

Alternatively or in addition, in some examples a value associated with an eye property such as a detected range in pupil size for the user may be evaluated with respect to a pre-set condition specifying a predetermined range in pupil size. In this case, in response to the eye information being indicative of a detected range in pupil size that is smaller than the predetermined range in pupil size, the control circuitry 520 can be operable to reduce the maximum image brightness associated with the predetermined image brightness setting. The predetermined range in pupil size can be set accordingly so as to identify a user for which little or no change in pupil size is exhibited for changes in brightness, as discussed previously. Hence, in response to the pre-set condition being satisfied, the maximum image brightness can be reduced to avoid wasteful use of processing resources that may arise from displaying a high brightness calibration image for which no or little change in pupil size is observed in the user. Optionally, in response to the pre-set condition being satisfied, the predetermined image brightness setting may be modified so as to specify a single image brightness for each of the one or more calibration images. For example, for a sequence of two or more calibration images for which the predetermined image brightness setting specifies two or more different image brightnesses (i.e. a minimum image brightness and a maximum image brightness), the predetermined image brightness setting may be modified to specify the minimum image brightness for each of the calibration images.

The above discussion provides examples in which the control circuitry is operable to generate one or more of the eye tracking calibration images to be displayed to the user according to a predetermined image brightness setting and is capable of modifying the predetermined image brightness setting in dependence on the eye information. It will be appreciated that any of the above mentioned techniques may similarly be performed with respect to a predetermined hardware brightness setting associated with a backlight array of a display element of an HMD to reduce the brightness setting accordingly and achieve the technical advantages discussed above.

In some embodiments of the disclosure, the control circuitry 520 is configured to select one or more of the eye tracking calibration images from a plurality of eye tracking calibration images having different image brightness in dependence on the eye information, and the processing circuitry 530 is configured to output one or more of the selected eye tracking calibration images for display. In some cases, the control circuitry 520 can be configured to select one or more of the eye tracking calibration images from a library of candidate eye tracking calibration images. For example, the information processing apparatus 500 may comprise storage circuitry to store multiple eye tracking calibration images spanning a range of image brightness so that selection can be performed to select one or more eye tracking calibration images with an acceptable image brightness.

Selection may be performed with respect to the library of candidate eye tracking calibration images in dependence on the eye information so as to select one or more calibration images each having an image brightness that is less than or equal to a maximum image brightness identified in dependence on the eye information.

In some embodiments of the disclosure, the control circuitry 520 is configured to select a calibration mode from a plurality of calibration modes in dependence on the eye information, the plurality of calibration modes each being associated with a set of one or more eye tracking calibration images, the plurality of calibration modes comprising: a first calibration mode associated with at least two eye tracking calibration images having different image brightness; and at least one of: a second calibration mode associated with at least two eye tracking calibration images having different image brightness and for which a maximum image brightness is less than a maximum image brightness for the first calibration mode; and a third calibration associated with one or more eye tracking calibration images having a same respective image brightness less than the maximum image brightness for the first calibration mode.

The first calibration mode comprises at least one relatively lower brightness calibration image and at least one relatively higher brightness calibration image. The first calibration mode may in some cases be a default calibration mode, so that without eye information for a user, or for a user for which the eye information indicates eye properties that are considered within normal ranges, the first calibration mode would, by default, be used. The second calibration mode and third calibration mode represent calibration modes that can be selected for improving processing efficiency and/or improving user comfort. In some cases, the plurality of modes may comprise one or both of the second calibration mode and the third calibration mode. The second calibration mode may be better suited for some users, whereas the third calibration mode may be better suited for other users. The second calibration mode comprises at least one relatively lower brightness calibration (which may be the same as or different to that of the first calibration mode) and at least one relatively higher brightness calibration image for which a maximum image brightness is less than a maximum image brightness for the first calibration mode. The third calibration mode comprises one or more eye tracking calibration images having a same respective image brightness which may be the same as or different to the relatively lower brightness calibration image of the first calibration mode and which is less than the maximum image brightness for the first calibration mode. Therefore, for a user for which the eye information indicates one or more properties associated with photophobia, selection of the second calibration mode may allow calibration to be achieved with improved user comfort. For a user for which the eye information indicates that pupil size exhibits little or no change (e.g. when displaying images by the HMD with varying brightness, the captured images indicate a relatively consistent pupil size, which may be due to various factors such as a health condition), selection of the third calibration mode may allow calibration to be achieved with improved efficiency.

The above mentioned plurality of calibration modes each represent a sequence of calibration images which is to be displayed for allowing eye tracking calibration for a user. The above mentioned differences in image brightness may be achieved through one or more of control of a backlight array and control of pixel values for the images. Moreover, in some embodiments a calibration mode may represent a sequence of calibration images to be displayed by an HMD using a same (or substantially same) backlight setting for each of the calibration images with potential changes in image brightness achieved based on image processing techniques. In other embodiments, a calibration mode may represent a sequence of calibration images to be displayed by an HMD with potential changes in image brightness achieved based on adjustment(s) to the backlight setting for some of the calibration images. For example, a sequence of calibration images may be displayed and corresponding backlight settings also specified for use during display of the calibration images. In other embodiments, changes in image brightness may be achieved during a calibration mode based on any suitable combination of the above techniques.

Techniques involving selection of a calibration mode are discussed in more detail later.

The above discussion provides examples of possibilities for controlling image brightness associated with one or more calibration images to be displayed. It will be appreciated that depending on which eye property is present for the user in question, then a different control scheme may be called for. For example, for a user for which little or no change in pupil size is observed (even for images of greatly differing brightness), then it may be beneficial to display a set of one or more calibration images using a single image brightness. Conversely, for a user with photophobia it may be beneficial to display a set of two or more calibration images using two or more image brightnesses so as to obtain calibrations for two or more different brightnesses whilst controlling a maximum image brightness so as to facilitate improved user comfort.

In some examples, the apparatus 500 may store information regarding one or more pre-set conditions and an image brightness control scheme for at least some of the pre-set conditions. Thus, comparison of the generated eye information with one or more of the pre-set conditions can be performed to determine whether any of the pre-set conditions are present for the user. In response to determining that a pre-set condition is present for the user, then an image brightness control scheme associated with that pre-set condition can be performed by the control circuitry.

For example, a pre-set condition may specify a predetermined range in pupil size so that when the generated eye information is indicative of a range in detected pupil size for the user that is less than the predetermined range in pupil size (indicating that the user's range in pupil size is detected as being smaller than that of the predetermined range), then an image brightness control scheme for that predetermined eye property can be used. Similarly, another pre-set condition may specify a grayscale colour value for an iris and an associated brightness control scheme. Another predetermined eye property may specify a type of eye condition associated with photophobia an associated brightness control scheme.

As explained above, one or more eye properties for at least one eye of a user can be detected from one or more of the captured images. Based on one or more of the captured images, one or more physical eye properties and/or one or more behavioural eye properties can be detected.

In some embodiments of the disclosure, one or more detected physical eye properties comprise one or more from the list consisting of: a detected iris colour of at least on eye, a detected pupil size of the at least one eye; a detected greatest pupil size of the at least one eye; and a detected smallest pupil size of the at least one eye. Any suitable detection algorithm may be used for detecting one or more of the pupil and the iris in a captured image. For example, contour detection techniques may be used.

The analysis circuitry may receive a plurality of captured images comprising at least one eye of the user during viewing of display images displayed to the user by an HMD. Hence, a state of the user's eye in response to viewing display images displayed by the HMD can be observed in the captured images and a largest observed pupil size and a smallest observed pupil size can be detected.

The plurality of captured images may correspond to any suitable period of time. In some cases, the plurality of captured images may be captured as one image capture session or may be captured using two or more image capture sessions. For example, a subset of the plurality of captured images may be captured during a first period of time and another subset of the plurality of captured images may be captured during a second period of time, in which the first period of time may or may not be contiguous with the second period of time. Some of the plurality of captured images may be captured during viewing of a first content and some of the plurality of captured images may be captured during viewing of another content. For example, images of the user's eye(s) may be captured during display by the HMD of display images for a content such as a movie or video game, or one or more menu screens. Hence, a largest and a smallest observed pupil size during viewing of images displayed by an HMD can be detected and eye information generated accordingly for allowing such properties to be used for controlling image brightness for one or more calibration images to be displayed.

In some examples, the analysis circuitry may receive a plurality of captured images comprising at least one eye of the user, in which at least some of the plurality of captured images are captured during viewing of calibration images displayed by the HMD. The HMD may display calibration images and images of the user's eye(s) can be captured during such display for detection of one or more eye properties. Hence, one or more subsequent calibration images to be displayed may have their image brightness controlled responsive to eye information generated from analysis of images of the user eye(s) captured during viewing of calibration images. For example, an eye tracking calibration stage may involve displaying a sequence of calibration images with progressively increasing image brightness (for example, image brightness may progressively increase with each calibration image or with every N calibration images, where N is an integer in the range 2 to 10), and images can be captured of the user's eye(s) when viewing the calibration images and eye information generated accordingly so that one or more subsequent calibration images yet to be displayed may have their image brightness controlled responsive to eye information. For example, one or more of an iris colour and a range in pupil size detected during an initial stage of the calibration may be used for controlling image brightness for one or more subsequent calibration images according to any of the techniques discussed above.

In some examples, the above mentioned plurality of calibration modes may each have a same initial sequence of calibration images which is displayed with a same image brightness. Responsive to eye information generated from images captured during the display to the user of the initial sequence of calibration images, one of the plurality of calibration modes may be selected so that one or more subsequent calibration images to be displayed correspond to the selected calibration mode. In particular, by default the control circuitry 520 may automatically select the first calibration mode, and responsive to the generated eye information switch to one of the second calibration mode and third calibration mode.

Hence more generally, eye properties detected during a calibration procedure may be used to control image brightness for one or more other calibration images which are yet to be displayed to the user. Therefore, in some embodiments of the disclosure the analysis circuitry is operable to: receive captured images comprising at least one eye of a user when viewing displayed eye tracking calibration images displayed by the HMD; detect one or more eye properties for the user in dependence on at least some of the captured images; and generate eye information indicative of one or more of the eye properties for the user. The control circuitry can thus be operable to control, in dependence on the eye information, image brightness associated with one or more other eye tracking calibration images to be displayed to the user and the processing circuitry can thus be operable to output one or more of the other eye tracking calibration images for display to the user by the HMD.

In some embodiments of the disclosure, the eye information is indicative of a detected greatest pupil size and a detected smallest pupil size, and the control circuitry is configured to control the image brightness associated with one or more of the eye tracking calibration images to be displayed, in dependence on a magnitude of a difference between the detected greatest pupil size and the detected smallest pupil size. A detected pupil size range can be evaluated with respect to a pre-set condition as discussed previously, and if the pre-set condition is satisfied then the control circuitry is operable to control the image brightness associated with one or more of the eye tracking calibration images to be displayed. For example, referring again to the predetermined image brightness setting, the control circuitry may be configured to modify the predetermined image brightness setting depending on whether the detected pupil size range satisfies the pre-set condition. The pre-set condition may specify a predefined range for the pupil size (e.g. X mm as discussed previously) so that in response to detected pupil size range being smaller than or equal to the predefined range (corresponding to satisfying the pre-set condition) the control circuitry modifies the predetermined image brightness setting. In some cases, the control circuitry can be configured to modify the predetermined image brightness setting to specify a single image brightness since the eye information indicates that the user exhibits little or no pupil size change and as such there may be little or no benefit to performing calibration at higher image brightness. Referring again to the plurality of calibration modes, the first calibration mode may be a default calibration mode and the control circuitry may be configured to select one of the second calibration mode and the third calibration mode in response to the detected pupil size range satisfying the pre-set condition. In particular, whilst selection of any of the second mode and third mode for the user in question can yield performance benefits, optimal arrangements preferably select the third calibration mode for such a case.

In some embodiments of the disclosure, the control circuitry is configured to select the second calibration mode in response the eye information being indicative of an iris colour in a predetermined range of iris colour. For example, the above mentioned grayscale techniques may be used to determine a user for which the detected iris colour corresponds a predetermined range of iris colour (e.g. a predetermined range comprising blue and grey iris colours). Generally, in response to the information being indicative of a predetermined iris colour such as a blue or grey iris colour (or more generally a relatively light iris colour), the second calibration mode can be selected. Relatively light iris colours are generally associated with greater sensitivity to bright light and therefore the second calibration mode can allow calibration with at least two or more different brightnesses with a reduced maximum brightness relative to the first calibration mode thereby potentially allowing improved user comfort.

In some embodiments of the disclosure, the first and second calibration mode may each comprise a sequence of calibration images comprising a first set of calibration images and a second set of calibration images. For both the first and second calibration mode, the first set may have a same image brightness. For both the first calibration mode and the second calibration mode, the second set may have a greater image brightness than the first set used for that mode. For the first calibration mode the second set may have a greater image brightness than the second set for the second calibration mode.

Hence, the first set may be considered a lower image brightness set and the second set may be considered a higher image brightness set for that mode, with the second calibration mode differing from the first calibration mode due to having a lower image brightness for the second set. The first set and second set may each comprise a number of targets Z (e.g. Z = 5 or 10, or a value in that range) to be targeted by the user's gaze direction. For example, the targets may be arranged in the four corners of the calibration images and one target at a central position.

Hence more generally, the first calibration mode and the second calibration mode may both use a first set and second set of calibration images including a same number of targets and with same positions, and may differ only in that the second set of one or more calibration images has a reduced image brightness for the second calibration mode.

In some embodiments of the disclosure, the third calibration mode may comprise a first set of calibration images. The first set of calibration images may be the same as the first set of calibration images associated with the first calibration mode and second calibration mode and may have a substantially same image brightness. The third calibration mode may differ from that first and second calibration modes in that the first calibration mode may not include a second set of calibration image (i.e. may only include the first set having single image brightness). Therefore, the selection of the third calibration mode (e.g. responsive to the pupil size range satisfying the pre-set condition) can be used to allow eye tracking calibration to be performed using a reduced number of calibration images and thus allowing faster and more efficient calibration for the user. More generally, selection of the third calibration mode can be used for skipping a relatively higher brightness part of a calibration that may otherwise be provided by selecting one of the first and second calibration modes.

In some embodiments of the disclosure, each calibration image comprises at least one target (e.g. stimuli) for being targeted by a user's gaze direction. The calibration images may have a background and targets. During calibration, gaze tracking may be used to detect when a user's gaze targets a visual target (e.g. this may be inferred by detecting little or no change in detected eye features indicating that the user has identified and is targeting the visual target), and subsequent to being targeted a next calibration image may be displayed and so on so that a sequence of such images maybe displayed to calibrate for respective screen locations/areas. Alternatively or in addition, a same calibration image may simultaneously display two or more visual targets to be successively targeted.

In some embodiments of the disclosure, one or more behavioural eye properties comprise one or more of: a detected blinking rate associated with the least one eye of the user; and a detected gaze aversion with respect to a display unit or a portion of the display unit of the HMD; and a detected gaze aversion with respect to the display unit of the portion of the display unit of the HMD during display of one or more images exceeding a threshold image brightness; and detected closed eye duration within a set time interval; and a detected at least partially closed eye duration within the set time interval.

Detection of a total number of blinks within a given period of time can be obtained based on the captured images. A number of blinks per unit time can thus be calculated. Generally, during HMD use a user can become fatigued (e.g. in some cases this may specifically relate to eye fatigue) which correlates with a higher blinking rate. In some cases, users with photophobia may also exhibit a higher blinking rate during viewing of relatively bright images. Hence, more generally, user discomfort can be inferred based on blinking rate and one of the second calibration mode and the third calibration mode can be selected.

Therefore in some embodiments of the disclosure, the control circuitry can be configured to select one of the second calibration mode and the third calibration mode in response to the detected blinking rate associated with the least one eye of the user exceeding a pre-set threshold value. For example, a threshold value such as a value in the range 5-50 blinks per minute may be used, and more preferably a value in the range 20-50 blinks per minute.

Detection of a closed eye duration for at least one of the user's eyes within a set time interval can be obtained based on the captured images. Similar to that discussed above with respect to blinking, in some cases a user with fatigue or experiencing discomfort from viewing of bright images may seek to close their eye(s) for a period of time. For example, alternatively or in addition to increased blinking rate, prolonged blinks (e.g. durations of potentially 4 or 5 or more times longer than associated with normal blinking) may be exhibited as a consequence of fatigue and/or discomfort. Hence in some cases, alternatively or in addition to a detected blinking rate, a detection of a closed eye duration for at least one of the user's eye within a set time interval may be beneficial (e.g. this may be more beneficial in some cases in that a user may effectively close their eye(s) for a significant duration whilst only performing a small number of blinks and blink rate detection may not provide an accurate assessment for such cases). The control circuitry can be configured to select one of the second calibration mode and the third calibration mode in response to the detected closed eye duration associated with the least one eye of the user exceeding a pre-set threshold value. For example, a pre-set threshold value such as a value in the range 10%-50% of the set time interval may be used. For example, the set time interval may correspond to a period such as 60 seconds and a threshold value in the range 6 seconds to 30 seconds may be set. Other suitable values for the set time interval and the threshold value may be used.

Alternatively or in addition to detecting a closed eye duration for at least one of the user's eyes, detection of an at least partially closed eye duration for at least one of the user's eyes within a set time interval can also be obtained based on the captured images. Similar to that discussed above with respect to blinking and/or eye closing, in some cases a user with fatigue or experiencing discomfort from viewing of bright images may seek to partially close their eye(s) for a period of time (e.g. squint). For example, as a consequence of fatigue and/or discomfort (e.g. when viewing high brightness images) a user's eye(s) may attain an at least partially closed state for a period of time. Hence in some cases, a detection of a duration for which a user's eye(s) is/are at least partially closed within a set time interval may be used. Similar to that discussed above with respect to a closed eye duration, the control circuitry can be configured to select one of the second calibration mode and the third calibration mode in response to the detected at least partially closed eye duration associated with the least one eye of the user exceeding a pre-set threshold value.

For example, a reference image corresponding to the user's eye(s) in a normal open state may be used and at least one property associated with the eye(s) in a normal open state may be evaluated with respect to a property of the eye(s) in the captured images to detect that the eye(s) is/are at least partially closed. In some examples, a size of a sclera (also known as the white of the eye) in the reference image may be detected and similarly a size of the sclera in one or more of the captured images may be detected and on this basis a detection of an at least partially closed state for the eye can be detected. For example, a threshold condition such as the size of the sclera is smaller than the reference size of the sclera (obtained from the reference image) by at least a threshold amount (e.g. a value in the range 5 -20%) may be used for detection of the at least partially closed state. Alternatively or in addition, a ratio of a size of the sclera region to a size of the combined iris and pupil region (i.e. a ratio of a size of a white portion to a coloured portion corresponding to the iris and the pupil) in the reference image may be detected, and similarly a ratio of a size of the sclera region to a size of the combined iris and pupil region may be detected in at least some of the captured images. Generally, during eye squinting a smaller proportion of the sclera is expected to be observable in the captured images, whereas observation of the combined iris and pupil region may be substantially unchanged (or also reduced but by a smaller extent relative to that observed for the sclera). Therefore, a ratio of the size of the sclera region to the size of the combined iris and pupil region may be used for detection of the at least partially closed state for one or both of the user's eyes.

Optionally, based on one or more of a comparison of a detected sclera region size with a corresponding reference and/or a comparison of ratio of a detected sclera region size to a detected combined iris and pupil region size with a corresponding reference, a value in the range 0 to 1 may be calculated for the eye(s), with a value of 1 corresponding to a normal open state, a value less than 1 corresponding to an at least partially closed state, and a value of 0 corresponding to a closed state (or vice versa with 1 corresponding to the closed state). A threshold value may be set within the range 1 to 0 for thereby allowing detection of the at least partially closed eye state. For example, the threshold value may be set to have a value that is less than 1 and greater than 0.5 so that the at least partially closed state is detected in response to the calculated value being less than the threshold value.

Detection of gaze aversion with respect to a display unit or a portion of the display unit of the HMD can be obtained based on the captured images. A gaze direction for the user with respect to the display unit (e.g. without using calibration parameters) can be detected. Generally, during display of relatively bright images a user may avert their gaze either away from the display, or away from a central portion of the display, to attempt to alleviate symptoms associated with sensitivity to bright light. More generally a higher frequency of gaze aversion away from a display (if allowed by an HMD when worn by a user) or at least away from a certain portion (e.g. central portion) can correlate with sensitivity to bright light.

Detection of gaze aversion with respect to the display unit or the portion of the display unit of the HMD during display of one or more images exceeding a threshold image brightness can be obtained based on the captured images and information indicative of image brightness associated with images being displayed by the display unit. Hence, detection of gaze aversion during display of images exceeding the threshold image brightness can be used for identifying photosensitivity for the user.

In some embodiments of the disclosure, one or more of the properties of the eye comprise one or more of: a detected specularity associated with an exterior surface of the eye; and one or more detected types of eye condition associated with photophobia.

Detection of a specularity associated with an exterior surface of the eye can be obtained based on the captured images. A degree of the specularity generally provides an indication of an amount of fluid on an exterior surface of the eye. Generally, reduced specualrity correlates with reduced amounts of fluid on the exterior surface. Hence, a relative amount of fluid on an exterior surface of the eye can be inferred. Lower amounts of fluid can be associated with increased sensitivity to bright light and/or can generally indicate user fatigue. Moreover, chronic dry eye is an eye condition for which a common symptom is sensitivity to bright light. Alternatively or in addition, increased levels of fatigue can correlate with dry eyes. Hence more generally, the control circuitry can be configured to select one of the second calibration mode and the third calibration mode in response to the detecting a specularity associated with an exterior surface of the eye that is less than a threshold amount. For example, a relative size of an area exhibiting a specular reflection may be compared with a threshold size, and in response to this being less than the threshold size one of the second calibration mode and the third calibration mode may be selected. For example, it may be particularly beneficial for selection of the second calibration mode in such cases so as to allow calibration with at least two different images brightnesses with improved user comfort.

In some embodiments of the disclosure, one or more of the properties of the eye comprise one or more detected types of eye condition associated with photophobia. Detection of a type of eye condition such as cataracts or astigmatism may be obtained based on the captured images. A symptom often experience by users with cataracts and/or astigmatism is sensitivity to bright light (i.e. photophobia). Cataracts generally affects the lens of the eye causing it to become cloudy and scatter incident light. Presence of cataracts may be detected based on the captured images. Techniques for detecting presence of cataracts based on image analysis are generally known and are not discussed in detail. In some examples, an infra-red light source included as part of the HMD may be used to illuminate the eye and optionally auto-refraction techniques may be used for assessing internal refractive properties of the user's eye. On this basis, detection of astigmatism may also be obtained. Astigmatism relates to an imperfection in the cornea or lens curvature resulting in blurry vision and may also be associated with sensitivity to bright light.

Therefore, in some embodiments of the disclosure, the control circuitry can be configured to select one of the second calibration mode and the third calibration mode in response to the eye information indicating a detect type of eye condition associated with photophobia (e.g. cataracts and/or astigmatism).

As explained previously, in some cases the plurality of calibration modes comprise the first calibration mode and at least one of the second calibration mode and the third calibration mode. Hence, for cases in which the plurality of calibration modes comprises just one of the second calibration mode and the third calibration mode, the above techniques referring to selecting one of the second calibration mode and the third calibration mode refer to selecting from the plurality of calibration modes to select the second calibration mode or the third calibration mode. For cases in which the plurality of calibration modes comprises each of the first, second and third calibration modes, the above techniques referring to selecting one of the second calibration mode and the third calibration may select any one of these modes. As explained above, for some detected eye properties it may be more favourable to select the second calibration mode so as to allow calibration with two or more different image brightnesses and at a lower maximum image brightness than the first calibration mode, and for other detected eye properties it may be more favourable to select the third calibration mode so as to allow calibration to be achieved more efficiently and/or with a shortened duration.

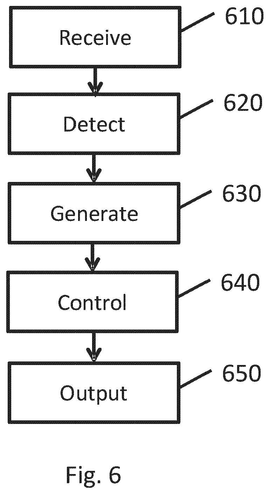

Figure 6 is a schematic flowchart illustrating a method in accordance with embodiments of the disclosure. The method comprises:
receiving (at a step 610) captured images comprising at least one eye of a user when viewing display images displayed by a head mounted display "HMD";
detecting (at a step 620) one or more eye properties for the user in dependence on at least some of the captured images; and
generating (at a step 630) eye information indicative of one or more of the eye properties for the user;
controlling (at a step 640), in dependence on the eye information, image brightness associated with one or more eye tracking calibration images to be displayed to the user by the HMD; and
outputting (at a step 650) one or more of the eye tracking calibration images for display by the HMD.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practised otherwise than as specifically described herein.

## Claims

1. An information processing apparatus (500) comprising:
analysis circuitry (510) to:
receive captured images comprising at least one eye of a user when viewing display images displayed by a head mounted display "HMD"; and
detect one or more eye properties for the user in dependence on at least some of the captured images and generate eye information indicative of one or more of the eye properties for the user;
control circuitry (520) to control, in dependence on the eye information, image brightness associated with one or more eye tracking calibration images respectively comprising one or more calibration targets having known positions to be displayed to the user by the HMD; and
processing circuitry (530) to output one or more of the eye tracking calibration images for display by the HMD.

2. The information processing apparatus according to claim 1, wherein the control circuitry is configured to control a maximum image brightness associated with one or more of the eye tracking calibration images in dependence on the eye information.

3. The information processing apparatus according to claim 1 or claim 2, wherein the control circuitry is configured to control a backlight array associated with the HMD to thereby control the image brightness associated with one or more eye tracking calibration images to be displayed to the user.

4. The information processing apparatus according to any preceding claim, wherein the control circuitry is configured to generate one or more of the eye tracking calibration images for display according to a predetermined image brightness setting, and the control circuitry is configured to determine whether to reduce a maximum image brightness associated with the predetermined image brightness setting in dependence on the eye information.

5. The information processing apparatus according to any one of claims 1 to 3, wherein the control circuitry is configured to select a calibration mode from a plurality of calibration modes in dependence on the eye information, the plurality of calibration modes each being associated with a set of one or more eye tracking calibration images, the plurality of calibration modes comprising:
a first calibration mode associated with at least two eye tracking calibration images having different image brightness; and
at least one of:
a second calibration mode associated with at least two eye tracking calibration images having different image brightness and for which a maximum image brightness is less than a maximum image brightness for the first calibration mode; and
a third calibration mode associated with one or more eye tracking calibration images having a same respective image brightness less than the maximum image brightness for the first calibration mode.

6. The information processing apparatus according to claim 5, wherein the first calibration mode is a default calibration mode and the control circuitry is configured to select one of the second calibration mode and the third calibration mode in response to the eye information satisfying a predetermined condition.

7. The information processing apparatus according to any preceding claim, wherein the one or more eye properties comprise at least one of one or more physical eye properties and one or more behavioural eye properties.

8. The information processing apparatus according to claim 7, wherein the one or more physical eye properties comprise one or more from the list consisting of:
a detected iris colour;
a detected pupil size of the at least one eye;
a detected greatest pupil size of the at least one eye;
a detected smallest pupil size of the at least one eye; and
one or more detected internal refractive properties of the at least one eye;
one or more detected types of eye condition associated with photophobia; and
a detected specularity associated with an exterior surface of the eye.

9. The information processing apparatus according to any preceding claim, wherein the control circuitry is configured to control the image brightness associated with one or more of the eye tracking calibration images in dependence on a magnitude of a difference between a detected greatest pupil size and a detected smallest pupil size.

10. The information processing apparatus according to claim 9 when dependent claim 6, wherein the control circuitry is configured to select the third calibration mode in response to the magnitude of the difference between the detected greatest pupil size and the detected smallest pupil size being less than a predetermined threshold value.

11. The information processing apparatus according to claim 6, wherein the control circuitry is configured to select the second calibration mode in response the eye information being indicative of an iris colour in a predetermined range of iris colour.

12. The information processing apparatus according to any one of claims 7 to 11, wherein the one or more behavioural eye properties comprise one or more of:
a detected blinking rate associated with the least one eye of the user; and
a detected gaze aversion with respect to a display unit or a portion of the display unit of the HMD;
a detected gaze aversion with respect to the display unit or the portion of the display unit of the HMD during display of one or more images exceeding a threshold image brightness;
a detected closed eye duration within a set time interval; and
a detected at least partially closed eye duration within the set time interval.

13. The information processing apparatus according to any preceding claim, wherein the information processing apparatus is a head mounted display "HMD" apparatus comprising one or more image sensors to capture the images comprising the at least one eye of the user when viewing display images of different image brightness displayed by the HMD.

14. A computer-implemented method comprising:
receiving (610) captured images comprising at least one eye of a user when viewing display images displayed by a head mounted display "HMD";
detecting (620) one or more eye properties for the user in dependence on at least some of the captured images; and
generating (630) eye information indicative of one or more of the eye properties for the user;
controlling (640), in dependence on the eye information, image brightness associated with one or more eye tracking calibration images respectively comprising one or more calibration targets having known positions to be displayed to the user by the HMD; and
outputting (650) one or more of the eye tracking calibration images for display by the HMD.

15. Computer software which when executed by a computer causes the computer to perform the method according to claim 14.

## Patentansprüche

1. Informationsverarbeitungseinrichtung (500), umfassend:
Auswerteschaltung (510) zum:
Empfangen von aufgenommenen Bildern, umfassend mindestens ein Auge eines Benutzers, wenn Anzeigebilder betrachtet werden, die durch eine Helmanzeige "HMD" angezeigt werden; und
Erfassen einer oder mehrerer Augeneigenschaften für den Benutzer in Abhängigkeit von mindestens einigen der aufgenommenen Bilder und Erzeugen von Augeninformationen, die eine oder mehrere der Augeneigenschaften für den Benutzer angeben;
Steuerschaltung (520), um, in Abhängigkeit von den Augeninformationen, eine Bildhelligkeit zu steuern, die einem oder mehreren Augenverfolgungskalibrierungsbildern zugeordnet ist, jeweils umfassend ein oder mehrere Kalibrierungsziele, die bekannte Positionen aufweisen, die dem Benutzer durch die HMD anzuzeigen sind; und
Verarbeitungsschaltung (530), um eines oder mehrere der Augenverfolgungskalibrierungsbilder für eine Anzeige durch die HMD auszugeben.

2. Informationsverarbeitungseinrichtung nach Anspruch 1, wobei die Steuerschaltung konfiguriert ist, um eine maximale Bildhelligkeit, die einem oder mehreren der Augenverfolgungskalibrierungsbilder zugeordnet ist, in Abhängigkeit von den Augeninformationen zu steuern.

3. Informationsverarbeitungseinrichtung nach Anspruch 1 oder 2, wobei die Steuerschaltung konfiguriert ist, um ein Hintergrundbeleuchtungsarray zu steuern, das der HMD zugeordnet ist, um dadurch die Bildhelligkeit zu steuern, die einem oder mehreren Augenverfolgungskalibrierungsbildern, die dem Benutzer anzuzeigen sind, zugeordnet ist.

4. Informationsverarbeitungseinrichtung nach einem der vorstehenden Ansprüche, wobei die Steuerschaltung konfiguriert ist, um eines oder mehrere der Augenverfolgungskalibrierungsbilder für die Anzeige gemäß einer vorbestimmten Bildhelligkeitseinstellung zu erzeugen, und die Steuerschaltung konfiguriert ist, um zu bestimmen, ob eine maximale Bildhelligkeit, die der vorbestimmten Bildhelligkeitseinstellung zugeordnet ist, in Abhängigkeit von den Augeninformationen zu reduzieren ist.

5. Informationsverarbeitungseinrichtung nach einem der Ansprüche 1 bis 3, wobei die Steuerschaltung konfiguriert ist, um einen Kalibrierungsmodus aus einer Vielzahl von Kalibrierungsmodi in Abhängigkeit von den Augeninformationen auszuwählen, wobei die Vielzahl von Kalibrierungsmodi jeweils einem Satz von einem oder mehreren Augenverfolgungskalibrierungsbildern zugeordnet ist, die Vielzahl von Kalibrierungsmodi umfassend:
einen ersten Kalibrierungsmodus, der mindestens zwei Augenverfolgungskalibrierungsbildern zugeordnet ist, die die unterschiedliche Bildhelligkeit aufweisen; und
mindestens eines von:
einem zweiten Kalibrierungsmodus, der mindestens zwei Augenverfolgungskalibrierungsbildern zugeordnet ist, die die unterschiedliche Bildhelligkeit aufweisen und für die eine maximale Bildhelligkeit geringer als eine maximale Bildhelligkeit für den ersten Kalibrierungsmodus ist; und
einem dritten Kalibrierungsmodus, der einem oder mehreren Augenverfolgungskalibrierungsbildern zugeordnet ist, die eine gleiche jeweilige Bildhelligkeit aufweisen, die geringer als die maximale Bildhelligkeit für den ersten Kalibrierungsmodus ist.

6. Informationsverarbeitungseinrichtung nach Anspruch 5, wobei der erste Kalibrierungsmodus ein Standardkalibrierungsmodus ist und die Steuerschaltung konfiguriert ist, um einen von dem zweiten Kalibrierungsmodus und dem dritten Kalibrierungsmodus als Reaktion darauf auszuwählen, dass die Augeninformationen eine vorbestimmte Bedingung erfüllen.

7. Informationsverarbeitungseinrichtung nach einem der vorstehenden Ansprüche, wobei die eine oder die mehreren Augeneigenschaften mindestens eine von einer oder mehreren physischen Augeneigenschaften und einer oder mehreren verhaltensbezogenen Augeneigenschaften umfassen.

8. Informationsverarbeitungseinrichtung nach Anspruch 7, wobei die eine oder die mehreren physischen Augeneigenschaften eines oder mehrere aus der Liste umfassen, bestehend aus:
einer erfassten Irisfarbe;
einer erfassten Pupillengröße des mindestens einen Auges;
einer erfassten größten Pupillengröße des mindestens einen Auges;
einer erfassten kleinsten Pupillengröße des mindestens einen Auges; und
einer oder mehrerer erfasster innerer Brechungseigenschaften des mindestens einen Auges;
einer oder mehrerer erfasster Arten von Augenerkrankungen, die einer Photophobie zugeordnet sind; und
einer erfassten Spiegelung, die einer Außenoberfläche des Auges zugeordnet ist.

9. Informationsverarbeitungseinrichtung nach einem der vorstehenden Ansprüche, wobei die Steuerschaltung konfiguriert ist, um die Bildhelligkeit, die einem oder mehreren der Augenverfolgungskalibrierungsbilder zugeordnet ist, in Abhängigkeit von einem Betrag eines Unterschieds zwischen einer erfassten größten Pupillengröße und einer erfassten kleinsten Pupillengröße zu steuern.

10. Informationsverarbeitungseinrichtung nach Anspruch 9, wenn abhängiger Anspruch 6, wobei die Steuerschaltung konfiguriert ist, um den dritten Kalibrierungsmodus als Reaktion darauf auszuwählen, dass der Betrag des Unterschieds zwischen der erfassten größten Pupillengröße und der erfassten kleinsten Pupillengröße kleiner als ein vorbestimmter Grenzwert ist.

11. Informationsverarbeitungseinrichtung nach Anspruch 6, wobei die Steuerschaltung konfiguriert ist, um den zweiten Kalibrierungsmodus als Reaktion darauf auszuwählen, dass die Augeninformationen eine Irisfarbe in einem vorbestimmten Bereich der Irisfarbe angeben.

12. Informationsverarbeitungseinrichtung nach einem der Ansprüche 7 bis 11, wobei die eine oder die mehreren verhaltensbezogenen Augeneigenschaften eines oder mehrere umfassen von:
einer erfassten Blinzelrate, die dem mindestens einen Auge des Benutzers zugeordnet ist; und
einer erfassten Blickabwendung hinsichtlich einer Anzeigeeinheit oder eines Abschnitts der Anzeigeeinheit der HMD;
einer erfassten Blickabwendung hinsichtlich der Anzeigeeinheit oder des Abschnitts der Anzeigeeinheit der HMD während der Anzeige eines oder mehrerer Bilder, die eine Bildhelligkeitsschwelle überschreiten;
einer erfassten Dauer des geschlossenen Auges innerhalb eines festgelegten Zeitintervalls; und
einer erfassten Dauer eines mindestens teilweise geschlossenen Auges innerhalb des festgelegten Zeitintervalls.

13. Informationsverarbeitungseinrichtung nach einem der vorstehenden Ansprüche, wobei die Informationsverarbeitungseinrichtung eine Helmanzeigeeinrichtung, "HMD"-Einrichtung, ist, umfassend einen oder mehrere Bildsensoren, um die Bilder aufzunehmen, umfassend das mindestens eine Auge des Benutzers, wenn Anzeigebilder unterschiedlicher Bildhelligkeit durch die HMD angezeigt werden.

14. Computerimplementiertes Verfahren, umfassend:
Empfangen (610) von aufgenommenen Bildern, umfassend mindestens ein Auge eines Benutzers, wenn Anzeigebilder betrachtet werden, die durch eine Helmanzeige "HMD" angezeigt werden;
Erfassen (620) einer oder mehrerer Augeneigenschaften für den Benutzer in Abhängigkeit von mindestens einigen der aufgenommenen Bilder; und
Erzeugen (630) von Augeninformationen, die eine oder mehrere der Augeneigenschaften für den Benutzer angeben;
Steuern (640), in Abhängigkeit von der Augeninformation, der Bildhelligkeit, die einem oder mehreren Augenverfolgungskalibrierungsbildern zugeordnet ist, jeweils umfassend ein oder mehrere Kalibrierungsziele, die bekannte Positionen aufweisen, die dem Benutzer durch die HMD anzuzeigen sind; und
Ausgeben (650) eines oder mehrerer der Augenverfolgungskalibrierungsbilder für die Anzeige durch die HMD.

15. Computersoftware, die, wenn sie durch einen Computer ausgeführt wird, den Computer veranlasst, das Verfahren nach Anspruch 14 durchzuführen.

## Revendications

1. Appareil de traitement d'informations (500) comprenant :
un système de circuits d'analyse (510) pour :
recevoir des images capturées comprenant au moins un œil d'un utilisateur lorsqu'il visualise des images d'affichage affichées par un visiocasque « HMD » ; et
détecter une ou plusieurs propriétés oculaires pour l'utilisateur en dépendance d'au moins certaines des images capturées et générer des informations oculaires indiquant une ou plusieurs des propriétés oculaires pour l'utilisateur ;
un système de circuits de commande (520) pour commander, en dépendance des informations oculaires, une luminosité d'image associée à une ou plusieurs images d'étalonnage de suivi oculaire comprenant respectivement une ou plusieurs cibles d'étalonnage ayant des positions connues à afficher à l'utilisateur par le HMD ; et
un système de circuits de traitement (530) pour délivrer en sortie une ou plusieurs des images d'étalonnage de suivi oculaire pour affichage par le HMD.

2. Appareil de traitement d'informations selon la revendication 1, dans lequel le système de circuits de commande est configuré pour commander une luminosité d'image maximale associée à une ou plusieurs des images d'étalonnage de suivi oculaire en dépendance des informations oculaires.

3. Appareil de traitement d'informations selon la revendication 1 ou la revendication 2, dans lequel le système de circuits de commande est configuré pour commander une matrice de rétroéclairage associée au HMD pour commander de ce fait la luminosité d'image associée à une ou plusieurs images d'étalonnage de suivi oculaire à afficher à l'utilisateur.

4. Appareil de traitement d'informations selon l'une quelconque revendication précédente, dans lequel le système de circuits de commande est configuré pour générer une ou plusieurs des images d'étalonnage de suivi oculaire pour affichage selon un réglage de luminosité d'image prédéterminé, et le système de circuits de commande est configuré pour déterminer s'il faut réduire une luminosité d'image maximale associée au réglage de luminosité d'image prédéterminé en dépendance des informations oculaires.

5. Appareil de traitement d'informations selon l'une quelconque des revendications 1 à 3, dans lequel le système de circuits de commande est configuré pour sélectionner un mode d'étalonnage parmi une pluralité de modes d'étalonnage en dépendance des informations oculaires, la pluralité de modes d'étalonnage étant associés chacun à un ensemble d'une ou plusieurs images d'étalonnage de suivi oculaire, la pluralité de modes d'étalonnage comprenant :
un premier mode d'étalonnage associé à au moins deux images d'étalonnage de suivi oculaire ayant une luminosité d'image différente ; et
au moins l'un parmi :
un deuxième mode d'étalonnage associé à au moins deux images d'étalonnage de suivi oculaire ayant une luminosité d'image différente et pour lesquelles une luminosité d'image maximale est inférieure à une luminosité d'image maximale pour le premier mode d'étalonnage ; et
un troisième mode d'étalonnage associé à une ou plusieurs images d'étalonnage de suivi oculaire ayant une même luminosité d'image respective inférieure à la luminosité d'image maximale pour le premier mode d'étalonnage.

6. Appareil de traitement d'informations selon la revendication 5, dans lequel le premier mode d'étalonnage est un mode d'étalonnage par défaut et le système de circuits de commande est configuré pour sélectionner l'un du deuxième mode d'étalonnage et du troisième mode d'étalonnage en réponse aux informations oculaires respectant une condition prédéterminée.

7. Appareil de traitement d'informations selon l'une quelconque revendication précédente, dans lequel la ou les propriétés oculaires comprennent au moins l'une parmi une ou plusieurs propriétés oculaires physiques et une ou plusieurs propriétés oculaires comportementales.

8. Appareil de traitement d'informations selon la revendication 7, dans lequel la ou les propriétés oculaires physiques comprennent un ou plusieurs parmi la liste constituée de :
une couleur d'iris détectée ;
une taille de pupille détectée de l'au moins un œil ;
une plus grande taille de pupille détectée de l'au moins un œil ;
une plus petite taille de pupille détectée de l'au moins un œil ; et
une ou plusieurs propriétés réfringentes internes détectées de l'au moins un œil ;
un ou plusieurs types détectés de condition oculaire associée à une photophobie ; et
une spécularité détectée associée à une surface extérieure de l'œil.

9. Appareil de traitement d'informations selon l'une quelconque revendication précédente, dans lequel le système de circuits de commande est configuré pour commander la luminosité d'image associée à une ou plusieurs des images d'étalonnage de suivi oculaire en dépendance d'une grandeur d'une différence entre une plus grande taille de pupille détectée et une plus petite taille de pupille détectée.

10. Appareil de traitement d'informations selon la revendication 9 prise en dépendance de la revendication 6, dans lequel le système de circuits de commande est configuré pour sélectionner le troisième mode d'étalonnage en réponse à la grandeur de la différence entre la plus grande taille de pupille détectée et la plus petite taille de pupille détectée étant inférieure à une valeur seuil prédéterminée.

11. Appareil de traitement d'informations selon la revendication 6, dans lequel le système de circuits de commande est configuré pour sélectionner le deuxième mode d'étalonnage en réponse aux informations oculaires indiquant une couleur d'iris dans une plage prédéterminée de couleur d'iris.

12. Appareil de traitement d'informations selon l'une quelconque des revendications 7 à 11, dans lequel la ou les propriétés oculaires comportementales comprennent un ou plusieurs parmi :
une vitesse de clignement détectée associée à l'au moins un œil de l'utilisateur ; et
un détournement de regard détecté par rapport à une unité d'affichage ou à une partie de l'unité d'affichage du HMD ;
un détournement de regard détecté par rapport à l'unité d'affichage ou à la partie de l'unité d'affichage du HMD pendant l'affichage d'une ou plusieurs images dépassant une luminosité d'image seuil ;
une durée d'œil fermé détectée au sein d'un intervalle de temps réglé ; et
une durée d'œil au moins partiellement fermé détectée au sein de l'intervalle de temps réglé.

13. Appareil de traitement d'informations selon l'une quelconque revendication précédente, dans lequel l'appareil de traitement d'informations est un appareil visiocasque « HMD » comprenant un ou plusieurs capteurs d'image pour capturer les images comprenant l'au moins un œil de l'utilisateur lorsqu'il visualise des images d'affichage de luminosité d'image différente affichées par le HMD.

14. Procédé implémenté par ordinateur comprenant :
la réception (610) d'images capturées comprenant au moins un œil d'un utilisateur lorsqu'il visualise des images d'affichage affichées par un visiocasque « HMD » ;
la détection (620) d'une ou plusieurs propriétés oculaires pour l'utilisateur en dépendance d'au moins certaines des images capturées ; et
la génération (630) d'informations oculaires indiquant une ou plusieurs des propriétés oculaires pour l'utilisateur ;
la commande (640), en dépendance des informations oculaires, d'une luminosité d'image associée à une ou plusieurs images d'étalonnage de suivi oculaire comprenant respectivement une ou plusieurs cibles d'étalonnage ayant des positions connues à afficher à l'utilisateur par le HMD ; et
la sortie (650) d'une ou plusieurs des images d'étalonnage de suivi oculaire pour affichage par le HMD.

15. Logiciel d'ordinateur qui, lorsqu'il est exécuté par un ordinateur, amène l'ordinateur à mettre en œuvre le procédé selon la revendication 14.
